# EUROPÄISCHE PATENTSCHRIFT

(11) **EP 1 498 057 B1**
(45) Veröffentlichungstag und Bekanntmachung des Hinweises auf die Patenterteilung: **12.12.2007**
(21) Anmeldenummer: 04016582.1
(22) Anmeldetag: 14.07.2004
(51) Int. Cl.: A47J 27/62

(54) **Verfahren zum Bestimmen von Parametern eines Garprozesses eines Nahrungsmittels und dieses benutzende Steuervorrichtung**
Method for determining parameters of a cooking process of a food product and the control device used for it.
Procédé de détermination des paramètres d'un processus de cuisson d'un produit alimentaire et le dispositif de commande utilisé.

(30) Priorität: 15.07.2003 DE 10332021
(43) Veröffentlichungstag der Anmeldung: 19.01.2005
(73) Patentinhaber: Diehl AKO Stiftung & Co. KG, 88239 Wangen (DE)
(72) Erfinder: Arnold, Werner, 90449 Nürnberg (DE); Tzschoppe, Dietmar, 01156 Dresden (DE)
(74) Vertreter: Diehl Patentabteilung

(56) Entgegenhaltungen:
- DE-T2- 69 500 827

## Beschreibung

Die Erfindung betrifft ein Verfahren zum Bestimmen von Parametern eines Garprozesses eines Nahrungsmittels, insbesondere eines Fleischstückes, sowie eine Steuervorrichtung für ein Gargerät eines Nahrungsmittels, welches dieses Verfahren verwendet.

Aus der Praxis sind verschiedene Gargeräte, wie beispielsweise Elektroöfen und Mikrowellenöfen bekannt, die mit einer Garautomatik ausgerüstet sind. Im allgemeinen werden bei der Garautomatik die Art (z.B. Fleischsorte) und das Gewicht des zu garenden Nahrungsmittels eingegeben und auf der Basis der eingegebenen Werte automatisch die erforderlichen Parameter (Dauer und Temperatur) des Garprozesses ermittelt.

Eine derartige Vorrichtung ist beispielsweise auch aus der DE 695 00 827 T2 bekannt. Diese Druckschrift offenbart insbesondere eine Bratautomatik für Fleisch, bei welcher neben der Art und dem Gewicht des zu garenden Fleischstückes auch dessen Form (z.B. langgestreckt oder eher quadratisch) und ein gewünschter Gargrad (z.B. "medium" oder vollständig "durch") eingegeben werden können. Die Bestimmung der Gardauer und der Gartemperatur erfolgt anhand verschiedener Sätze von Kurven, welche die Garzeit in Abhängigkeit von dem Gewicht des Fleischstückes repräsentieren. der Gartemperatur erfolgt anhand verschiedener Sätze von Kurven, welche die Garzeit in Abhängigkeit von dem Gewicht des Fleischstückes repräsentieren.

Ferner offenbart die FR-A-2,584,914 ein Verfahren zur Bestimmung der Gardauer, bei welchem ein Schritt der Messung der Dicke des zu garenden Fleischstückes vorgenommen wird. Die Einbeziehung der Dicke des zu garenden Fleischstückes in die Ermittlung der erforderlichen Parameter des Garprozesses führt aber nicht unbedingt zu einem zufriedenstellenden Garergebnis, wie dies auch bereits in der Beschreibungseinleitung der bereits erwähnten DE 695 00 827 T2 ausgeführt ist.

Aus der Praxis sind ferner im allgemeinen spießförmig ausgebildete Garguttemperaturfühler bekannt, welche in die Mitte des zu garenden Nahrungsmittels gesteckt werden, um die Kerntemperatur des Gargutes während des Garprozesses überwachen und gegebenenfalls korrigieren zu können.

Ausgehend von dem vorgenannten Stand der Technik liegt der vorliegenden Erfindung die Aufgabe zugrunde, ein Verfahren zur Bestimmung von Parametern eines Garprozesses eines Nahrungsmittels vorzusehen, welches auch die Dicke des zu garenden Nahrungsmittels mit berücksichtigt und zu zufriedenstellenden Garergebnissen führt. Eine weitere Aufgabe der vorliegenden Erfindung besteht darin, eine Steuervorrichtung für ein Gargerät eines Nahrungsmittels bereitzustellen, welche das Verfahren der Erfindung benutzt.

Gemäß einem ersten Aspekt der vorliegenden Erfindung wird diese Aufgabe durch ein Verfahren zum Bestimmen von Parametern eines Garprozesses eines Nahrungsmittels mit den Merkmalen des Anspruchs 1 gelöst. Vorteilhafte Ausgestaltungen und Weiterbildungen des erfindungsgemäßen Verfahrens sind Gegenstand der Unteransprüche 2 bis 8.

Das Verfahren zur Bestimmung von Parametern eines Garprozesses eines Nahrungsmittels, insbesondere eines Fleischstückes, weist die Schritte a) des Eingebens der Art des Nahrungsmittels; b) des Bestimmens der Dicke des Nahrungsmittels; und c) des Vergleichens der bestimmten Dicke des Nahrungsmittels mit einem vorgegebenen Dickenschwellwert auf. Falls die bestimmte Dicke des Nahrungsmittels den vorgegebenen Dickenschwellwert überschreitet, werden die erforderlichen Parameter des Garprozesses unter Verwendung eines Garguttemperaturfühlers auf der Basis der eingegebenen Art des Nahrungsmittels ermittelt; und falls die bestimmte Dicke des Nahrungsmittels den vorgegebenen Dickenschwellwert nicht überschreitet, wird zunächst das Gewicht des Nahrungsmittels bestimmt und dann werden die erforderlichen Parameter des Garprozesses ohne Verwendung eines Garguttemperaturfühlers auf der Basis der eingegebenen Art und des bestimmten Gewichts des Nahrungsmittels ermittelt.

Der vorliegenden Erfindung liegt die Erkenntnis zugrunde, dass die Ermittlung von Gardauer und Gartemperatur auf der Basis von Art und Gewicht des zu garenden Nahrungsmittels nur bei Nahrungsmitteln bis zu einer bestimmten Dicke zu zufriedenstellenden Garergebnissen führt. Bei dickeren Nahrungsmitteln ist die Verwendung eines Garguttemperaturfühlers zur Überwachung der Kerntemperatur des Gargutes die bessere Lösung. Bei Nahrungsmittelarten, bei denen dies sinnvoll ist, wie beispielsweise bei Fleischstücken, wird deshalb gemäß der Erfindung zunächst die Dicke des Gargutes bestimmt, um beurteilen zu können, ob ein Garprozess mit oder ohne Garguttemperaturfühler erfolgen soll, um unter Berücksichtigung der Dicke des Gargutes zu einem für den Benutzer zufriedenstellenden Garergebnis zu gelangen.

Die Bestimmung der Dicke des Nahrungsmittels erfolgt vorzugsweise und im einfachsten Fall durch eine Eingabe der Dicke des Nahrungsmittels durch den Benutzer. Auch die Bestimmung des Gewichts des Nahrungsmittels erfolgt bevorzugt durch eine Eingabe des Gewichts des Nahrungsmittels durch den Benutzer.

In einer bevorzugten Ausführungsform kann ferner ein gewünschter Gargrad des Nahrungsmittels eingegeben werden. In diesem Fall erfolgt dann die Ermittlung der erforderlichen Parameter des Garprozesses jeweils auch auf der Basis des eingegebenen gewünschten Gargrades. Hierbei sollte die Eingabe des gewünschten Gargrades aber nur bei bestimmten Arten von Nahrungsmitteln möglich sein, welche aus gesundheitlichen Gründen nicht notwendigerweise ein vollständiges Garen vor dem Verzehr erfordern.

Ferner kann die Ermittlung der erforderlichen Parameter des Garprozesses auch auf der Basis der bestimmten Dicke des Nahrungsmittels erfolgen.

Die durch das Verfahren zu ermittelnden, erforderlichen Parameter des Garprozesses des Nahrungsmittels enthalten insbesondere die Dauer und die Temperatur des Garprozesses.

In einer bevorzugten Ausführungsform erfolgt die Ermittlung der erforderlichen Parameter des Garprozesses des Nahrungsmittels auf der Basis von im voraus abgelegten Kurven.

Gemäß einem weiteren Aspekt der vorliegenden Erfindung wird die oben genannte Aufgabe durch eine Steuervorrichtung eines Gargeräts eines Nahrungsmittels mit den Merkmalen des Anspruchs 9 gelöst. Vorteilhafte Ausgestaltungen und Weiterbildungen der Steuervorrichtung der Erfindung sind in den Unteransprüche 10 bis 15 angegeben.

Die Steuervorrichtung für ein Gargerät eines Nahrungsmittels dient dem Steuern des Garprozesses des Nahrungsmittels entsprechend ermittelten Parametern des Garprozesses und weist eine Eingabevorrichtung zum Eingeben der Art des Nahrungsmittels; eine Einrichtung zum Bestimmen der Dicke des Nahrungsmittels; eine Einrichtung zum Vergleichen der bestimmten Dicke des Nahrungsmittels mit einem vorgegebenen Dickenschwellwert; eine Einrichtung zum Bestimmen des Gewichts des Nahrungsmittels; und einen Garguttemperaturfühler zum Bestimmen der Temperatur des Garguts auf. Falls die bestimmte Dicke des Nahrungsmittels den vorgegebenen Dickenschwellwert überschreitet, ermittelt die Steuervorrichtung die erforderlichen Parameter des Garprozesses unter Verwendung des Garguttemperaturfühlers auf der Basis der eingegebenen Art des Nahrungsmittels; falls dagegen die bestimmte Dicke des Nahrungsmittels den vorgegebenen Dickenschwellwert nicht überschreitet, ermittelt die Steuervorrichtung die erforderlichen Parameter des Garprozesses ohne Verwendung des Garguttemperaturfühlers auf der Basis der eingegebenen Art und des bestimmten Gewichts des Nahrungsmittels.

Diese Steuervorrichtung ist somit speziell zur Verwendung des oben erläuterten Verfahrens der Erfindung mit den zugehörigen Vorteilen ausgebildet.

In einer bevorzugten Ausführungsform der Erfindung ist die Eingabevorrichtung ferner zum Eingeben der Dicke und/oder des Gewichts des Nahrungsmittels ausgebildet.

Die Eingabevorrichtung kann zusätzlich zum Eingeben eines gewünschten Gargrades des Nahrungsmittels ausgebildet sein. In diesem Fall ermittelt die Steuervorrichtung die erforderlichen Parameter des Garprozesses auch auf der Basis des eingegebenen gewünschten Gargrades.

Die Steuervorrichtung kann ferner die erforderlichen Parameter des Garprozesses auch auf der Basis der bestimmten Dicke des Nahrungsmittels ermitteln.

In einer Ausgestaltung der Erfindung enthalten die durch die Steuervorrichtung ermittelten, erforderlichen Parameter des Garprozesses des Nahrungsmittels die Dauer und die Temperatur des Garprozesses.

In einer weiteren Ausgestaltung der Erfindung ist außerdem eine Speichereinrichtung zum Speichern von Kurven vorgesehen, auf deren Basis die Steuervorrichtung die erforderlichen Parameter des Garprozesses des Nahrungsmittels ermitteln kann.

Das Gargerät ist beispielsweise ein Elektroofen oder ein Mikrowellenofen.

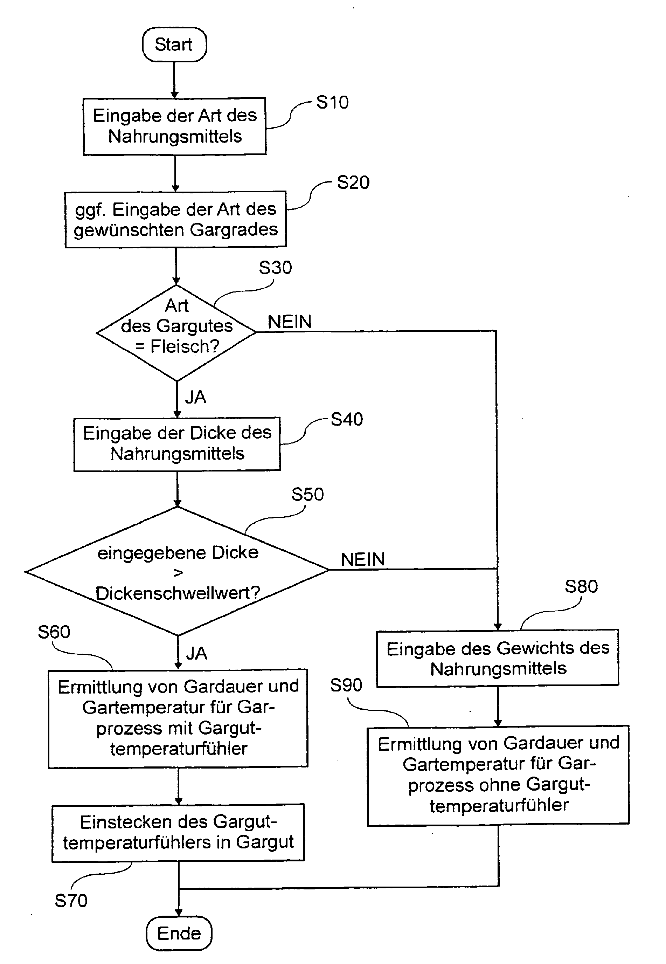

Obige sowie weitere Merkmale und Vorteile der vorliegenden Erfindung werden anhand der folgenden Beschreibung eines beispielhaften Ausführungsbeispiels der Erfindung unter Bezugnahme auf die Zeichnung besser verständlich. Darin zeigt die einzige Figur ein Flussdiagramm des Ablaufs eines erfindungsgemäßen Verfahrens zur Bestimmung von Parametern des Garprozesses eines Nahrungsmittels.

Die Figur zeigt in Form eines Flussdiagramms den Ablauf eines Ausführungsbeispiels des erfindungsgemäßen Verfahrens zur Bestimmung von Parametern eines Garprozesses eines Nahrungsmittels zur Realisierung einer Garautomatik eines Elektroofens oder Mikrowellenofens.

Zunächst wird der Benutzer in Schritt S 10 zur Eingabe der Art des zu garenden Nahrungsmittels aufgefordert. Die Art des Nahrungsmittels kann zum Beispiel aus verschiedenen Fleischsorten (Schwein, Kalb, Rind, Lammfleisch, Geflügel, etc.), Gemüsesorten (Kartoffel, Karotten, etc.), Gebäcksorten (Pizza, Kuchen, etc.) ausgewählt werden. Je nach eingegebener Art des Nahrungsmittels wird der Benutzer in einem nächsten Schritt S20 gegebenenfalls zur Eingabe eines gewünschten Gargrades (z.B. vollständig gegart, medium, etc.) aufgefordert. Die Eingabe des gewünschten Gargrades sollte allerdings nur bei bestimmten Arten von Nahrungsmitteln möglich sein, bei denen aus gesundheitlichen Gründen nicht unbedingt ein vollständiges Garen des Nahrungsmittels erforderlich ist. Dies wäre insbesondere bei Rindfleisch der Fall, das von vielen Benutzern bevorzugt mit einem Gargrad "medium" verzehrt wird.

Es wird nun in einem Schritt S30 anhand der eingegebenen Art des Nahrungsmittels entschieden, ob die Dicke des Nahrungsmittels für die Steuerung des Garprozesses berücksichtigt werden sollte oder nicht. Handelt es sich bei dem Gargut zum Beispiel um eine Fleischsorte (Entscheidung "JA"), so geht der Ablauf weiter zu Schritt S40, bei anderen Nahrungsmittelarten (Entscheidung "NEIN"), geht der Ablauf dagegen direkt weiter zu den Schritten S80 und S90, die weiter unten näher erläutert werden und im wesentlichen einer herkömmlichen Garautomatik entsprechen.

Handelt es sich bei dem zu garenden Nahrungsmittel um eine Fleischsorte, so wird der Benutzer in Schritt S40 zur Eingabe der Dicke des Fleischstückes aufgefordert. Grundsätzlich wäre es ebenfalls denkbar, den Elektroofen oder Mikrowellenofen mit einer Vorrichtung zum Messen der Dicke des Fleischstückes auszurüsten; diese Alternative erscheint aber wesentlich komplizierter und aufwändiger und damit auch teurer herstellbar zu sein.

Nach der Eingabe der Dicke des Fleischstückes in Schritt S40 wird die eingegebene Dicke mit einem vorgegebenen Dickenschwellwert verglichen (Schritt S50), der natürlich für jede Fleischsorte unterschiedlich gewählt sein kann. Liegt die eingegebene Dicke des Fleischstückes über dem vorgegebenen Dickenschwellwert (Entscheidung "JA"), so wird entschieden, dass ein Garprozess unter Verwendung eines Garguttemperaturfühlers vorteilhaft ist. Der Ablauf geht deshalb weiter zu den Verfahrensschritten S60 und S70.

In Schritt S60 werden die für den Garprozess erforderlichen Parameter, insbesondere die Gardauer und die Gartemperatur auf der Basis der eingegebenen Art des Nahrungsmittels und gegebenenfalls des eingegebenen gewünschten Gargrades ermittelt. Zusätzlich könnte auch noch die bestimmte bzw. eingegebene Dicke des Gargutes herangezogen werden. Für diese Ermittlung der erforderlichen Parameter des Garprozesses wird beispielsweise ein im voraus in einer entsprechenden Speichereinrichtung abgelegter Satz Kurven verwendet, welche die Gardauer und die Gartemperatur in Abhängigkeit von der Art und der Dicke des Nahrungsmittels und dem gewünschten Gargrad repräsentieren, wie dies dem Fachmann aus dem Stand der Technik bereits bekannt ist. Anschließend wird der Benutzer in Schritt S70 zum Einstecken des Garguttemperaturfühlers in das zu garende Nahrungsmittel aufgefordert, woraufhin der Garprozess sofort begonnen werden kann.

Falls dagegen die eingegebene Dicke des Fleischstückes nicht über dem zugehörigen vorgegebenen Dickenschwellwert (Entscheidung "NEIN" in Schritt S50) liegt, so wird entschieden, dass ein "normaler" Garprozess ohne Verwendung des Garguttemperaturfühlers zu einem zufriedenstellenden Garergebnis führt. Der Ablauf geht in diesem Fall weiter zu den Verfahrensschritten S80 und S90, die auch im Fall von anderen Nahrungsmittelarten durchgeführt werden (siehe die oben erläuterte Entscheidung von Schritt S30).

In Schritt S80 wird der Benutzer zunächst, wie bei einer herkömmlichen Garautomatik, zur Eingabe des Gewichts des zu garenden Nahrungsmittels aufgefordert. Grundsätzlich wäre es wiederum denkbar, den Elektroofen oder Mikrowellenofen mit einer speziellen Vorrichtung zum Messen des Gewichts des zu garenden Nahrungsmittels auszurüsten; diese Alternative erscheint aber wesentlich komplizierter und aufwändiger und damit auch teurer herstellbar zu sein.

Nach der Eingabe des Gewichts des Garguts durch den Benutzer werden die für den Garprozess erforderlichen Parameter, insbesondere die Gardauer und die Gartemperatur auf der Basis der eingegebenen Art des Nahrungsmittels, des eingegebenen Gewichts und gegebenenfalls des eingegebenen gewünschten Gargrades ermittelt. Zusätzlich könnte auch hier noch die bestimmte bzw. eingegebene Dicke des Gargutes herangezogen werden. Für die Ermittlung der erforderlichen Parameter des Garprozesses wird analog zu der Durchführung des Verfahrensschritts S60 beispielsweise ein im voraus in einer entsprechenden Speichereinrichtung abgelegter Satz Kurven verwendet, welche die Gardauer und die Gartemperatur in Abhängigkeit von der Art, des Gewichts und der Dicke des Nahrungsmittels und dem gewünschten Gargrad repräsentieren, wie dies dem Fachmann aus dem Stand der Technik bereits bekannt ist. Anschließend kann mit dem Garprozess begonnen werden.

Die Eingabe der Art des Nahrungsmittels, der Dicke und des Gewichts des Gargutes sowie gegebenenfalls des gewünschten Gargrades erfolgt vorzugsweise über eine gemeinsame Eingabevorrichtung, welche auch über ein Display verfügt, um dem Benutzer die jeweiligen Eingabeaufforderungen anzuzeigen und eine Kontrolle der eingegebenen Daten zu ermöglichen.

Die für den Garprozess erforderlichen Parameter enthalten insbesondere die Gardauer und die Gartemperatur, sind aber nicht allein auf diese beschränkt. Die Gartemperatur wird beispielsweise durch eine entsprechende Ansteuerung der Heizelemente des Gargeräts eingestellt. Es ist auch möglich, eine über die Dauer des Garprozesses variable Gartemperatur zu ermitteln und anschließend einzustellen.

## Patentansprüche

1. Verfahren zur Bestimmung von Parametern eines Garprozesses eines Nahrungsmittels, mit den Schritten:
a) Eingeben der Art des Nahrungsmittels;
b) Bestimmen der Dicke des Nahrungsmittels;
c) Vergleichen der bestimmten Dicke des Nahrungsmittels mit einem vorgegebenen Dickenschwellwert;
d1) falls die bestimmte Dicke des Nahrungsmittels den vorgegebenen Dickenschwellwert überschreitet, Ermitteln der erforderlichen Parameter des Garprozesses unter Verwendung eines Garguttemperaturfühlers, auf der Basis der eingegebenen Art des Nahrungsmittels; und
d2) falls die bestimmte Dicke des Nahrungsmittels den vorgegebenen Dickenschwellwert nicht überschreitet, Bestimmen des Gewichts des Nahrungsmittels und Ermitteln der erforderlichen Parameter des Garprozesses ohne Verwendung eines Garguttemperaturfühlers, auf der Basis der eingegebenen Art und des bestimmten Gewichts des Nahrungsmittels.

2. Verfahren nach Anspruch 1,
**dadurch gekennzeichnet,**
**dass** die Bestimmung der Dicke des Nahrungsmittels durch eine Eingabe der Dicke des Nahrungsmittels erfolgt.

3. Verfahren nach Anspruch 1 oder 2,
**dadurch gekennzeichnet,**
**dass** ferner ein gewünschter Gargrad des Nahrungsmittels eingegeben wird; und dass die Ermittlung der erforderlichen Parameter des Garprozesses auch auf der Basis des eingegebenen gewünschten Gargrades erfolgt.

4. Verfahren nach Anspruch 3,
**dadurch gekennzeichnet,**
**dass** die Eingabe des gewünschten Gargrades nur bei bestimmten Arten von Nahrungsmitteln ermöglicht wird.

5. Verfahren nach einem der Ansprüche 1 bis 4,
**dadurch gekennzeichnet,**
**dass** die Ermittlung der erforderlichen Parameter des Garprozesses auch auf der Basis der bestimmten Dicke des Nahrungsmittels erfolgt.

6. Verfahren nach einem der Ansprüche 1 bis 5,
**dadurch gekennzeichnet,**
**dass** die Bestimmung des Gewichts des Nahrungsmittels durch eine Eingabe des Gewichts des Nahrungsmittels erfolgt.

7. Verfahren nach einem der Ansprüche 1 bis 6,
**dadurch gekennzeichnet,**
**dass** die durch das Verfahren zu ermittelnden, erforderlichen Parameter des Garprozesses des Nahrungsmittels die Dauer und die Temperatur des Garprozesses enthalten.

8. Verfahren nach einem der Ansprüche 1 bis 7,
**dadurch gekennzeichnet,**
**dass** die Ermittlung der erforderlichen Parameter des Garprozesses des Nahrungsmittels auf der Basis von im voraus abgelegten Kurven erfolgt.

9. Steuervorrichtung für ein Gargerät eines Nahrungsmittels, zum Steuern des Garprozesses des Nahrungsmittels entsprechend ermittelten Parametern des Garprozesses, mit
einer Eingabevorrichtung zum Eingeben der Art des Nahrungsmittels;
einer Einrichtung zum Bestimmen der Dicke des Nahrungsmittels;
einer Einrichtung zum Vergleichen der bestimmten Dicke des Nahrungsmittels mit einem vorgegebenen Dickenschwellwert;
einer Einrichtung zum Bestimmen des Gewichts des Nahrungsmittels; und
einem Garguttemperaturfühler zum Bestimmen der Temperatur des Garguts,
wobei die Steuervorrichtung die erforderlichen Parameter des Garprozesses unter Verwendung des Garguttemperaturfühlers auf der Basis der eingegebenen Art des Nahrungsmittels ermittelt, falls die bestimmte Dicke des Nahrungsmittels den vorgegebenen Dickenschwellwert überschreitet, oder die erforderlichen Parameter des Garprozesses ohne Verwendung des Garguttemperaturfühlers auf der Basis der eingegebenen Art und des bestimmten Gewichts des Nahrungsmittels ermittelt, falls die bestimmte Dicke des Nahrungsmittels den vorgegebenen Dickenschwellwert nicht überschreitet.

10. Steuervorrichtung nach Anspruch 9,
**dadurch gekennzeichnet,**
**dass** die Eingabevorrichtung ferner zum Eingeben der Dicke und/oder des Gewichts des Nahrungsmittels ausgebildet ist.

11. Steuervorrichtung nach Anspruch 9 oder 10,
**dadurch gekennzeichnet,**
**dass** die Eingabevorrichtung ferner zum Eingeben eines gewünschten Gargrades des Nahrungsmittels ausgebildet ist; und
**dass** die Steuervorrichtung die erforderlichen Parameter des Garprozesses auch auf der Basis des eingegebenen gewünschten Gargrades ermittelt.

12. Steuervorrichtung nach einem der Ansprüche 9 bis 11,
**dadurch gekennzeichnet,**
**dass** die Steuervorrichtung die erforderlichen Parameter des Garprozesses auch auf der Basis der bestimmten Dicke des Nahrungsmittels ermittelt.

13. Steuervorrichtung nach einem der Ansprüche 9 bis 12,
**dadurch gekennzeichnet,**
**dass** die durch die Steuervorrichtung ermittelten, erforderlichen Parameter des Garprozesses des Nahrungsmittels die Dauer und die Temperatur des Garprozesses enthalten.

14. Steuervorrichtung nach einem der Ansprüche 9 bis 13,
**dadurch gekennzeichnet,**
**dass** ferner eine Speichereinrichtung zum Speichern von Kurven vorgesehen ist, auf deren Basis die Steuervorrichtung die erforderlichen Parameter des Garprozesses des Nahrungsmittels ermitteln kann.

15. Steuervorrichtung nach einem der Ansprüche 9 bis 14,
**dadurch gekennzeichnet,**
**dass** das Gargerät ein Elektroofen oder ein Mikrowellenofen ist.

## Claims

1. Method for determining parameters of a cooking process of a food product, comprising the steps of:
a) inputting the type of food product;
b) determining the thickness of the food product;
c) comparing the determined thickness of the food product with a predefined thickness threshold;
d1) if the determined thickness of the food product exceeds the predefined thickness threshold, establishing the required parameters of the cooking process, using a temperature sensor for products being cooked, on the basis of the input type of food product; and
d2) if the determined thickness of the food product does not exceed the predefined thickness threshold, determining the weight of the food product and establishing the required parameters of the cooking process, without using a temperature sensor for products being cooked, on the basis of the input type and the determined weight of the food product.

2. Method according to Claim 1, **characterized in that** the thickness of the food product is determined by inputting the thickness of the food product.

3. Method according to Claim 1 or 2, **characterized in that** a desired degree of cooking of the food product is also input; and
**in that** the required parameters of the cooking process are also established on the basis of the input desired degree of cooking.

4. Method according to Claim 3, **characterized in that** inputting the desired degree of cooking is rendered possible only for specific types of food products.

5. Method according to one of Claims 1 to 4, **characterized in that** the required parameters of the cooking process are also established on the basis of the determined thickness of the food product.

6. Method according to one of Claims 1 to 5, **characterized in that** the weight of the food product is determined by inputting the weight of the food product.

7. Method according to one of Claims 1 to 6, **characterized in that** the required parameters, which are to be established by the method, of the cooking process of the food product include the duration and the temperature of the cooking process.

8. Method according to one of Claims 1 to 7, **characterized in that** the required parameters of the cooking process of the food product are established on the basis of curves which are stored in advance.

9. Control apparatus for a cooking device of a food product, for controlling the cooking process of the food product in accordance with established parameters of the cooking process, comprising
an input apparatus for inputting the type of food product;
a device for determining the thickness of the food product;
a device for comparing the determined thickness of the food product with a predefined thickness threshold;
a device for determining the weight of the food product; and
a temperature sensor for products being cooked for determining the temperature of the product being cooked,
with the control apparatus establishing the required parameters of the cooking process, using the temperature sensor for products being cooked, on the basis of the input type of food product if the determined thickness of the food product exceeds the predefined thickness threshold, or establishing the required parameters of the cooking process, without using the temperature sensor for products being cooked, on the basis of the input type and the determined weight of the food product if the determined thickness of the food product does not exceed the predefined thickness threshold.

10. Control apparatus according to Claim 9, **characterized in that** the input apparatus is also designed for inputting the thickness and/or the weight of the food product.

11. Control apparatus according to Claim 9 or 10, **characterized in that** the input apparatus is also designed to input a desired degree of cooking of the food product; and
**in that** the control apparatus also establishes the required parameters of the cooking process on the basis of the input desired degree of cooking.

12. Control apparatus according to one of Claims 9 to 11, **characterized in that** the control apparatus also establishes the required parameters of the cooking process on the basis of the determined thickness of the food product.

13. Control apparatus according to one of Claims 9 to 12, **characterized in that** the required parameters, which are established by the control apparatus, of the cooking process of the food product include the duration and the temperature of the cooking process.

14. Control apparatus according to one of Claims 9 to 13, **characterized in that** a memory device is also provided for storing curves, on the basis of which curves the control apparatus can establish the required parameters of the cooking process of the food product.

15. Control apparatus according to one of Claims 9 to 14, **characterized in that** the cooking device is an electric oven or a microwave oven.

## Revendications

1. Procédé de détermination des paramètres d'un processus de cuisson d'un produit alimentaire, comportant les étapes suivantes:
a) introduire la nature du produit alimentaire;
b) déterminer l'épaisseur du produit alimentaire;
c) comparer l'épaisseur déterminée du produit alimentaire avec une valeur de seuil prédéterminée de l'épaisseur ;
d1) au cas où l'épaisseur déterminée du produit alimentaire dépasse la valeur de seuil prédéterminée de l'épaisseur, déterminer les paramètres nécessaires du processus de cuisson en utilisant un capteur de température du produit à cuire, sur la base de la nature du produit alimentaire introduite; et
d2) au cas où l'épaisseur déterminée du produit alimentaire ne dépasse pas la valeur de seuil prédéterminée de l'épaisseur, déterminer le poids du produit alimentaire et déterminer les paramètres nécessaires du processus de cuisson sans utiliser de capteur de température du produit à cuire, sur la base de la nature introduite et du poids déterminé du produit alimentaire.

2. Procédé selon la revendication 1, **caractérisé en ce que** l'on détermine l'épaisseur du produit alimentaire en introduisant l'épaisseur du produit alimentaire.

3. Procédé selon la revendication 1 ou 2, **caractérisé en ce que** l'on introduit en outre un degré de cuisson souhaité du produit alimentaire, et **en ce que** l'on détermine les paramètres nécessaires du processus de cuisson également sur la base du degré de cuisson souhaité introduit.

4. Procédé selon la revendication 3, **caractérisé en ce que** l'introduction du degré de cuisson souhaité n'est possible que pour certaines natures de produits alimentaires.

5. Procédé selon l'une quelconque des revendications 1 à 4, **caractérisé en ce que** l'on détermine les paramètres nécessaires du processus de cuisson également sur la base de l'épaisseur déterminée du produit alimentaire.

6. Procédé selon l'une quelconque des revendications 1 à 5, **caractérisé en ce que** l'on détermine le poids du produit alimentaire en introduisant le poids du produit alimentaire.

7. Procédé selon l'une quelconque des revendications 1 à 6, **caractérisé en ce que** les paramètres nécessaires du processus de cuisson du produit alimentaire, à déterminer par le procédé, comprennent la durée et la température du processus de cuisson.

8. Procédé selon l'une quelconque des revendications 1 à 7, **caractérisé en ce que** l'on détermine les paramètres nécessaires du processus de cuisson du produit alimentaire sur la base de courbes enregistrées au préalable.

9. Dispositif de commande pour un appareil de cuisson d'un produit alimentaire, permettant de commander le processus de cuisson du produit alimentaire suivant des paramètres déterminés du processus de cuisson, comprenant
un dispositif d'introduction pour introduire la nature du produit alimentaire;
un dispositif pour déterminer l'épaisseur du produit alimentaire;
un dispositif pour comparer l'épaisseur déterminée du produit alimentaire avec une valeur de seuil prédéterminée de l'épaisseur;
un dispositif pour déterminer le poids du produit alimentaire; et
un capteur de température du produit à cuire, pour déterminer la température du produit à cuire,
dans lequel le dispositif de commande détermine les paramètres nécessaires du processus de cuisson en utilisant le capteur de température du produit à cuire sur la base de la nature introduite du produit alimentaire, au cas où l'épaisseur déterminée du produit alimentaire dépasse la valeur de seuil prédéterminée de l'épaisseur, ou détermine les paramètres nécessaires du processus de cuisson sans utiliser le capteur de température du produit à cuire sur la base de la nature introduite et du poids déterminé du produit alimentaire, au cas où l'épaisseur déterminée du produit alimentaire ne dépasse pas la valeur de seuil prédéterminée de l'épaisseur.

10. Dispositif de commande selon la revendication 9, **caractérisé en ce que** le dispositif d'introduction est en outre conçu pour introduire l'épaisseur et/ou le poids du produit alimentaire.

11. Dispositif de commande selon la revendication 9 ou 10, **caractérisé en ce que** le dispositif d'introduction est en outre conçu pour introduire un degré de cuisson souhaité du produit alimentaire; et **en ce que** le dispositif de commande détermine les paramètres nécessaires du processus de cuisson également sur la base du degré de cuisson souhaité introduit.

12. Dispositif de commande selon l'une quelconque des revendications 9 à 11, **caractérisé en ce que** le dispositif de commande détermine les paramètres nécessaires du processus de cuisson également sur la base de l'épaisseur déterminée du produit alimentaire.

13. Dispositif de commande selon l'une quelconque des revendications 9 à 12, **caractérisé en ce que** les paramètres nécessaires du processus de cuisson du produit alimentaire, déterminés par le dispositif de commande, comprennent la durée et la température du produit à cuire.

14. Dispositif de commande selon l'une quelconque des revendications 9 à 13, **caractérisé en ce qu'**il est prévu en outre un dispositif de mémorisation pour enregistrer des courbes sur la base desquelles le dispositif de commande peut déterminer les paramètres nécessaires du processus de cuisson du produit alimentaire.

15. Dispositif de commande selon l'une quelconque des revendications 9 à 14, **caractérisé en ce que** l'appareil de cuisson est un four électrique ou un four à micro-ondes.
